# EUROPEAN PATENT APPLICATION

(11) **EP 4 683 384 A1**
(43) Date of publication of application: **21.01.2026**
(21) Application number: 23926832.9
(22) Date of filing: 16.03.2023
(51) Int. Cl.: H04W 36/00

(54) **SUCCESSFUL HANDOVER REPORT (SHR) RECORDING METHODS, APPARATUSES, DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2023/082014
(87) International publication number: WO 2024/187480

(57) **Abstract**

Provided in the present disclosure are SHR recording methods, apparatuses, a device and a storage medium. A method comprises: when a terminal has successfully completed handover between different radio access type (RAT) cells, in response to detecting an SHR trigger event, the terminal records an SHR in a first variable. The methods disclosed in the present disclosure may achieve successful recording and reporting of an SHR during handover of different RAT cells.

## Description

### TECHNICAL FIELD

The present disclosure relates to a field of communication technology, and specifically to a method and an apparatus for recording a successful handover report (SHR), a device and a storage medium.

### BACKGROUND

In a communication system, when a terminal completes a cell handover, the terminal usually needs to record a successful handover report (SHR) and report the SHR to a network device.

### SUMMARY

The present disclosure provides a method and an apparatus for recording a successful handover report (SHR), a device and a storage medium.

According to a first aspect, embodiments of the present disclosure provide a method for recording an SHR, including: when a terminal successfully completes a handover between cells of different radio access technologies (RATs), recording, by the terminal, an SHR in a first variable in response to detecting an SHR trigger event.

According to a second aspect, the embodiments of the present disclosure provide a method for recording an SHR, including: receiving, by a network device, an SHR reported by a terminal, in which the SHR is information generated by the terminal in response to detecting an SHR trigger event when the terminal successfully completes a handover between cells of different RATs.

According to a third aspect, the embodiments of the present disclosure provide a communication apparatus, including: a processing module, configured to, when a terminal successfully completes a handover between cells of different RATs, record, by the terminal, an SHR in a first variable in response to detecting an SHR trigger event.

According to a fourth aspect, the embodiments of the present disclosure provide a communication apparatus, including: a transceiver module, configured to receive, by a network device, an SHR reported by a terminal, in which the SHR is information generated by the terminal in response to detecting an SHR trigger event when the terminal successfully completes a handover between cells of different RATs.

According to a fifth aspect, the embodiments of the present disclosure provide a communication device. The communication device includes a processor. When a computer program stored in the memory is called by the processor, the method of the above first aspect or the above second aspect is implemented.

According to a sixth aspect, the embodiments of the present disclosure provide a communication device. The communication device includes a processor and a memory storing a computer program that when executed by the processor, cause the communication device to implement the method of the above first aspect or the above second aspect.

According to a seventh aspect, the embodiments of the present disclosure provide a communication device. The communication device includes a processor and an interface circuit, in which the interface circuit is configured to receive code instructions and transmit the code instructions to the processor; and the processor is configured to run the code instructions to cause the communication device to implement the method of the above first aspect or the above second aspect.

According to an eighth aspect, the embodiments of the present disclosure provide a communication system. The system includes the communication apparatus in the third aspect to the communication apparatus in the fourth aspect, or the system includes the communication device in the fifth aspect, or the system includes the communication device in the sixth aspect, or the system includes the communication device in the seventh aspect.

According to a ninth aspect, the embodiments of the present disclosure provide a computer-readable storage medium for storing instructions used by the above network device. When the instructions are executed, the terminal is caused to implement the method of the above first aspect or the above second aspect.

According to a tenth aspect, the embodiments of the present disclosure provide a computer program product including a computer program. When the computer program is running on a computer, the computer is caused to implement the method of the above first aspect or the above second aspect.

According to an eleventh aspect, the embodiments of the present disclosure provide a chip system. The chip system includes at least one processor and at least one interface, for supporting a network device to implement functions related to the method of the first aspect or the second aspect, for example, to determine or process at least one of data or information in the above method. In a possible design, the chip system further includes a memory for storing necessary computer programs and data for source and secondary nodes. The chip system may be composed of chips, or may be composed of chips and other discrete devices.

According to a twelfth aspect, the embodiments of the present disclosure provide a computer program. When the computer program is running on a computer, the computer is caused to execute the method of the above first aspect or the above second aspect.

### BRIEF DESCRIPTION OF THE DRAWINGS

The above and/or other aspects and advantages of embodiments of the present disclosure will become apparent and more readily appreciated from the following descriptions made with reference to the accompanying drawings.
FIG. 1 is a schematic diagram of an architecture of some communication system according to an embodiment of the present disclosure.
FIG. 2 is a flowchart of a method for recording a successful handover report (SHR) according to another embodiment of the present disclosure.
FIG. 3 is a flowchart of a method for recording an SHR according to another embodiment of the present disclosure.
FIG. 4 is a flowchart of a method for recording an SHR according to another embodiment of the present disclosure.
FIG. 5 is a flowchart of a method for recording an SHR according to another embodiment of the present disclosure.
FIG. 6 is a flowchart of a method for recording an SHR according to another embodiment of the present disclosure.
FIG. 7 is a flowchart of a method for recording an SHR according to another embodiment of the present disclosure.
FIG. 8 is a flowchart of a method for recording an SHR according to another embodiment of the present disclosure.
FIGs. 9a to 9c are flowcharts of a method for recording an SHR according to another embodiment of the present disclosure.
FIG. 10a is an interaction diagram of a method for recording an SHR according to the embodiments of the present disclosure.
FIG. 10b is a block diagram of a communication apparatus according to an embodiment of the present disclosure.
FIG. 11 is a block diagram of a communication apparatus according to an embodiment of the present disclosure.
FIG. 12 is a block diagram of a communication device according to an embodiment of the present disclosure.
FIG. 13 is a block diagram of a chip according to an embodiment of the present disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the embodiments of the present disclosure. Instead, they are merely examples of apparatuses and methods consistent with aspects related to the embodiments of the present disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without departing from the scope of embodiments of the present disclosure, the first information may also be referred to as the second information, and similarly, the second information may be referred to as the first information. Depending on the context, words "if" and "in case that" used here may be interpreted as "when", "while", or "in response to determining...".

The embodiments of the present disclosure are described in detail below. Examples of the embodiments are shown in the accompanying drawings, throughout which the same or similar labels represent the same or similar elements or elements having the same or similar functions. The embodiments below with reference to the accompanying drawings are exemplary and are intended to explain the present disclosure, but should not be construed as a limitation to the present disclosure.

For convenience of understanding, terms involved in the application are first introduced.

### 1. Long Term Evolution (LTE)

LTE refers to long-term evolution of a universal mobile telecommunications system (UMTS) technical standard formulated by the 3rd generation partnership project (3GPP). Key technologies such as orthogonal frequency division multiplexing (OFDM) and multiple input & multiple output (MIMO) are introduced in an LTE system, which significantly increases a spectral efficiency and a data transmission rate (under 20 MHz bandwidth with 2x2 MIMO and 64QAM, a theoretical maximum downlink transmission rate is 201 Mbps and after removing signaling overhead, the rate is approximately 150 Mbps; however, considering actual networking and terminal capability limits, it is generally accepted that a downlink peak rate is 100 Mbps and an uplink peak rate is 50 Mbps), and supports allocation of various bandwidths: 1.4 MHz, 3 MHz, 5 MHz, 10 MHz, 15 MHz, and 20 MHz.

### 2. New Radio (NR)

NR is a new standard for data communication between a terminal and a base station. The communication between the terminal and the base station is wireless, a medium of which is a radio that propagates in the air. The NR refers to a "new interface for wirelessly transmitting data in the air". An overall design of an NR protocol layer is enhanced and optimized based on the LTE. On a user plane, a service data application protocol layer is newly added on a packet data convergence protocol layer, and functions of the packet data convergence protocol layer and a radio link control sublayer are optimized to reduce the latency and enhance the reliability.

The enhancement of the NR relative to the LTE mainly include the following aspects that, the NR supports a larger spectrum range (supporting a broader millimeter-wave spectrum), the NR supports a more flexible frame structure, the NR supports a flexible parameter set, and the NR enhances the low latency of a radio interface.

Optionally, in a communication system, there are cells of different RATs, in which the cells of different RATs may include at least one of: an NR cell, or an LTE cell. Optionally, the terminal typically performs a handover between different cells. For example, the terminal may perform the handover between cells of the same RAT, such as a case that the terminal hands over from an NR cell to another NR cell; or, the terminal may perform the handover between cells of different RATs, such as a case that the terminal hands over from an NR cell to an LTE cell, or from an LTE cell to an NR cell. Optionally, when the terminal performs a cell handover, there is usually a need to record and report an SHR. However, it is currently supported that, the SHR is recorded and reported only for the scenario where "the terminal performs the handover between cells of the same RAT", while there is no method for recording and reporting the SHR for the scenario where "the terminal performs the handover between cells of different RATs".

In view of the above, the present disclosure provides a method for recording an SHR.

In order to better understand the method for recording an SHR in the embodiments of the present disclosure, a communication system applicable to the embodiments of the present disclosure is firstly described.

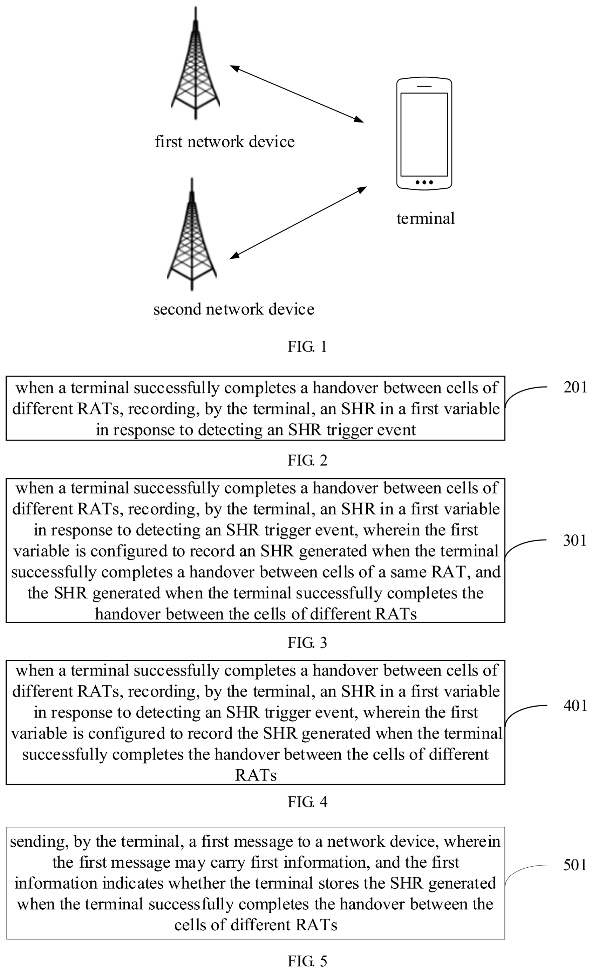

Referring to FIG. 1, which is a schematic diagram of an architecture of a communication system according to an embodiment of the present disclosure. The communication system may include, but is not limited to, at least two network devices and one terminal. A number and form of devices shown in FIG. 1 are for example only and do not constitute a limitation of the embodiments of the present disclosure. In practical application, two or more network devices, or one or more terminals may be included. The communication system in FIG. 1 including two network devices and one terminal is shown as an example. The two network devices may be a first network device and a second network device. The first network device may be a network device (i.e., source network device) corresponding to a source cell before the terminal performs a cell handover, and the second network device may be a network device (i.e., target network device) corresponding to a target cell after the terminal performs the cell handover.

It needs to be noted that the technical solution in the embodiments of the disclosure may be applied to various communication systems, for example, an LTE system, a 5th generation (5G) mobile communication system, a 5G new radio (NR) system, or other new mobile communication systems in the future.

The network device (such as the first network device or the second network device as mentioned above) in the embodiments of the present disclosure is an entity on the network side for transmitting or receiving signals. For example, the network device may be an evolved NodeB (eNB), a transmission reception point (TRP), a radio remote head (RRH), a next generation NodeB (gNB) in an NR system, a base station in other future mobile communication systems, or an access node in a wireless fidelity (WiFi) system, etc. The embodiments of the present disclosure do not limit a specific technology and a specific device form used by the base station. The base station in the embodiments of the present disclosure includes a central unit (CU) and a distributed unit (DU), in which the CU may also be called a control unit. A CU-DU structure may be used to separate the base station (e.g., protocol layers of the base station), so that some of the functions of the protocol layers are centrally controlled by the CU, and a remaining part or all of functions of the protocol layers are distributed in the DU, which is centrally controlled by the CU.

The terminal in the embodiments of the present disclosure is an entity on a user side for receiving or transmitting signals, such as a mobile phone. The terminal may also be called a user equipment (UE), a mobile station (MS), a mobile terminal (MT), etc. The terminal may be a car, a smart car, a mobile phone, a wearable device, and a Pad, with a communication function, a computer with wireless transceiving functions, a virtual reality (VR) terminal, an augmented reality (AR) terminal, a wireless terminal in an industrial control, a wireless terminal in a self-driving, a wireless terminal in remote medical surgery, a wireless terminal in a smart grid, a wireless terminal in a transportation safety, a wireless terminal in a smart city, a wireless terminal in a smart home, etc. The embodiments of the disclosure do not limit a specific technology and a specific device form used by the terminal.

It may be understood that the communication system in the embodiments of the present disclosure is to more clearly explain the technical solution of the embodiments of the present disclosure, and does not constitute a limitation on the technical solution in the embodiments of the present disclosure. Those skilled in the art know that with an evolution of a system architecture and emergence of a new service scenario, the technical solution in the embodiments of the present disclosure is equally applicable to similar technical problems.

In addition, for convenience of understanding the embodiments of the present disclosure, following points are explained.

First, in the present disclosure, without conflict, each step in any implementation or any embodiment may be implemented as an independent embodiment, and the steps may be arbitrarily combined. For example, a solution obtained by removing some steps from an implementation or embodiment may also be implemented as an independent embodiment. Moreover, an order of steps in an implementation or embodiment may be arbitrarily exchanged. In addition, optional methods or examples in an implementation or embodiment may be arbitrarily combined. Furthermore, various implementations or embodiments may be arbitrarily combined. For example, some or all steps from different implementations or embodiments may be arbitrarily combined, and an implementation or embodiment may be arbitrarily combined with optional methods or examples from other implementations or embodiments.

Second, regarding expressions such as "A or B", "A and/or B", "at least one of A or B", "in a case A, in another case B", and "in response to a case A, in response to another case B" in the present disclosure, depending on situations, may include at least one of following solutions: performing A independently of B, that is, performing A in some implementations; performing B independently of A, that is, performing B in some implementations; selectively performing A or B, that is, selecting one of A or B for execution in some implementations; performing both A and B, that is, performing A and B in some implementations.

Third, each element, row, or column in tables involved in the present disclosure may be implemented as an independent embodiment. A combination of any element, row, or column may also be implemented as an independent embodiment.

Fourth, in some implementations or embodiments, expressions such as "including A," "containing A," "indicating A," "carrying A" in the present disclosure may be interpreted as directly carrying A or indirectly indicating A.

Fifth, in some implementations or embodiments, expressions such as "in response to...", "in the case that/of...", "when...", "while...", "in case that/of ..." and "if..." in the present disclosure may be used interchangeably.

In a scenario where the terminal performs a successful handover between cells of different RATs, there is still an underlying issue of the successful handover.

If mobility performance may not be optimized based on this issue, it may lead to a failure of subsequent related handover procedures. Therefore, how to optimize the mobility performance in such scenario is an urgent problem to be solved. In one embodiment, the terminal may record the SHR so that the network device optimizes the mobility performance of the terminal.

A method and an apparatus for recording an SHR, a device and a storage medium provided by the embodiments of the present disclosure are described in detail below with reference to accompanying drawings.

FIG. 2 is a flowchart of a method for recording an SHR according to an embodiment of the present disclosure. The method is performed by a terminal. As shown in FIG. 2, the method for recording an SHR may include the following step at S201.

At S201, when a terminal successfully completes a handover between cells of different RATs, the terminal records an SHR in a first variable in response to detecting an SHR trigger event.

Optionally, in an embodiment of the present disclosure, the cells of different RATs may include at least one of: an NR cell; or an LTE cell.

Optionally, the handover between the cells of different RATs includes at least one of: a handover from an NR cell to an LTE cell; or a handover from an LTE cell to an NR cell.

It needs to be noted that the above mentioned "handover between cells of different RATs" may also be referred to as "an inter-RAT handover". It should be understood that "the handover between cells of different RATs" and "the inter-RAT handover" mentioned in the embodiments of the present disclosure are merely exemplary descriptions; and other descriptions with the same or similar meaning as "the handover between cells of different RATs" and "the inter-RAT handover" should also fall within a protection scope of the present disclosure.

Optionally, in an embodiment of the present disclosure, "successfully completes the handover between cells" may be understood that: when the terminal receives a random access response message sent by the target network device and the random access response message carries a cell radio network temporary identity (C-RNTI) of a target cell, it is determined/considered that the cell handover is successful. Optionally, "when the terminal successfully completes the handover between cells of different RATs" mentioned in the embodiments of the present disclosure may refer to a moment when the terminal has just completed the handover between cells of different RATs, or may refer to a moment after the terminal has completed the handover between cells of different RATs.

Optionally, in an embodiment of the present disclosure, "detecting the SHR trigger event" may be for example, understood that: the terminal has detected that the terminal satisfies a trigger condition of the SHR. Optionally, in an embodiment of the present disclosure, the network device (e.g., the source network device of the terminal) may send SHR configuration information to the terminal. The SHR configuration information may include a trigger condition for triggering the SHR. Optionally, the trigger condition of the SHR may include a trigger threshold of a specific timer. The specific timer may include at least one of: a timer T304, a timer T310, or a timer T312. The trigger threshold may be understood that: when a running duration of the specific timer reaches the trigger threshold of the specific timer, it is determined that the terminal satisfies the trigger condition of the SHR. Optionally, the terminal may determine whether to trigger generation of the SHR based on the trigger condition of the SHR. For example, when the terminal satisfies the trigger condition of the SHR, it is determined that the SHR trigger event is detected, and the terminal may generate the SHR at this time; and when the terminal does not satisfy the trigger condition of the SHR, it is determined that no SHR trigger event is detected, and the terminal may not generate the SHR at this time.

Optionally, in an embodiment of the present disclosure, the SHR trigger event may be: a trigger event based on a specific timer. Optionally, the SHR trigger event may include at least one of: a trigger event based on a timer T304; a trigger event based on a timer T310; or a trigger event based on a timer T312.

Optionally, in an embodiment of the present disclosure, the above-mentioned "trigger event based on the timer T304" may include: a running duration of the timer T304 being greater than or equal to a first threshold, that is, a trigger threshold of the timer T304 is the first threshold. Optionally, in an embodiment of the present disclosure, the timer T304 may be started when the terminal receives a reconfiguration message (e.g., a radio resource control (RRC) reconfiguration message sent by the source network device of the terminal). Optionally, after receiving the reconfiguration message, the terminal may perform the cell handover procedure to access the target network device and simultaneously start the timer T304. Optionally, the running duration of the timer T304 may indicate a duration during which the terminal has not accessed the target network device after receiving the RRC reconfiguration message. Optionally, when the running duration of the timer T304 is greater than or equal to a second threshold, it may indicate that there is a cell handover failure in the terminal. Optionally, the second threshold is greater than the first threshold.

Optionally, in an embodiment of the present disclosure, the above-mentioned "trigger event based on the timer T310" may include: a running duration of the timer T310 being greater than or equal to a third threshold, that is, a trigger threshold of the timer T310 is the third threshold. Optionally, the timer T310 may be started when the terminal detects physical layer problems between the terminal and the source network device. Optionally, during the running duration of the timer T310, if a radio link recovery of the terminal is detected, the timer T310 may be terminated. Optionally, when the running duration of the timer T310 is greater than or equal to a fourth threshold, it is determined that there is a radio link failure in the terminal. Optionally, the fourth threshold is greater than the third threshold.

Optionally, in an embodiment of the present disclosure, the above-mentioned "trigger event based on the timer T312" may include: a running duration of the timer T312 being greater than or equal to a fifth threshold, that is, a trigger threshold of the timer T312 is the fifth threshold. Optionally, the timer T312 may be started during the operation of the timer T310. The timer T312 may be used to time a radio link failure recovery procedure of the terminal. The running duration of the timer T310 may indicate: a duration from a moment when the terminal reports a measurement report (e.g., a measurement report related to the radio link recovery) to a moment when the radio link of the terminal recovers (i.e., a moment when synchronization of the terminal with the network device (e.g., source network device) recovers). Optionally, when the running duration of the timer T312 is greater than or equal to a sixth threshold, it is determined that there is a radio link failure in the terminal. Optionally, the sixth threshold is greater than the fifth threshold.

Optionally, in an embodiment of the present disclosure, when recording the SHR, the terminal may record the SHR in a first variable.

Optionally, in an embodiment of the present disclosure, the first variable is configured to record an SHR generated when the terminal successfully completes the handover between cells of the same RAT, and the SHR generated when the terminal successfully completes the handover between the cells of different RATs. Optionally, "the handover between cells of the same RAT" may include at least one of: a handover from an NR cell to another NR cell; or a handover from an LTE cell to another LTE cell. Optionally, in an embodiment of the present disclosure, when the first variable is used to record the SHR generated when the terminal successfully completes the handover between the cells of the same RAT, and the SHR generated when the terminal successfully completes the handover between the cells of different RATs, the first variable may be: an existing variable used to record the "SHR generated when performing the handover between cells of the same RAT", for example, the first variable may be a "VarSuccessHO-Report variable".

It may be seen from the above contents that, in an embodiment of the present disclosure, "the first variable is configured to record the SHR generated when the terminal successfully completes the handover between cells of the same RAT, and the SHR generated when the terminal successfully completes the handover between the cells of different RATs" may be understood that: the terminal reuses the existing variable (e.g., the existing variable used to record "the SHR generated when performing the handover between cells of the same RAT") to record "the SHR generated when performing the handover between the cells of different RATs".

It needs to be noted that the above-mentioned "handover between cells of the same RAT" mentioned above may also be referred to as "an intra-RAT handover". It should be understood that "the handover between cells of the same RAT" and "the intra-RAT handover" mentioned in the embodiments of the present disclosure are merely exemplary descriptions, and other descriptions with the same or similar meaning as "the handover between cells of the same RAT" and "the intra-RAT handover" should also fall within a protection scope of the present disclosure.

Optionally, in another embodiment of the present disclosure, the first variable may be configured to record the SHR generated when the terminal successfully completes the handover between the cells of different RATs. Simultaneously, a second variable is further recorded in the terminal. The second variable is different from the first variable, and the second variable is configured to record the SHR generated when the terminal successfully completes the handover between cells of the same RAT. Optionally, the second variable may be: the existing variable used to record "the SHR generated when performing the handover between cells of the same RAT", for example, the second variable may be the "VarSuccessHO-Report variable"; and the first variable may be an independent variable independent of the second variable, for example, the first variable may be a "VarSuccessHO-Report-interRAT variable".

It may be seen from the above contents that, in an embodiment of the present disclosure, "the first variable is configured to record the SHR generated when the terminal successfully completes the handover between the cells of different RATs, and the second variable is configured to record the SHR generated when the terminal successfully completes the handover between cells of the same RAT" may be understood that: the terminal does not reuse the existing variable to record "the SHR generated when performing the handover between the cells of different RATs", but uses an independent variable independent of the existing variable to record "the SHR generated when performing the handover between cells of different RATs".

Optionally, in an embodiment of the present disclosure, when the terminal records the first variable and the second variable, the terminal may also record one part of "the SHR generated when the terminal successfully completes the handover between the cells of different RATs" in the first variable and another part in the second variable.

Optionally, in an embodiment of the present disclosure, when the first variable is configured to record the SHR generated when the terminal successfully completes the handover between the cells of different RATs and the second variable is configured to record the SHR generated when the terminal successfully completes the handover between the cells of the same RAT, after the terminal records the SHR generated when the terminal successfully completes the handover between the cells of different RATs in the first variable, the terminal may delete or retain the content in the second variable.

Optionally, in an embodiment of the present disclosure, recording the SHR in the first variable may include: recording, by the terminal, an SHR in the first variable, in which the SHR is generated when the terminal successfully completes a latest handover between the cells of different RATs. Optionally, in an embodiment of the present disclosure, after the first variable records the SHR that is generated when the terminal successfully completes the latest handover between the cells of different RATs, the content previously recorded in the first variable may be covered by the new content (i.e., the SHR generated when the terminal successfully completes the latest handover between the cells of different RATs). That is, when the terminal records the new content using the first variable, the terminal deletes the content previously recorded in the first variable.

Optionally, in an embodiment of the present disclosure, a reason for covering (or deleting) the content previously recorded in the first variable is that the terminal primarily reports, to the network device, the SHR generated when performing the latest handover. The SHRs generated when performing previous handovers may have already been reported by the terminal to the network device, so there is no need to report the SHRs previously recorded to the network device again. Therefore, the content previously recorded in the first variable may be covered (or deleted) to prevent from occupying the resources (such as a storage resource and a transmission resource), thus avoiding a waste of the resources.

Optionally, in an embodiment of the present disclosure, the content recorded in the first variable will be deleted by the terminal after being stored for a preset time period. For example, the preset time period may be 48 hours.

Optionally, in an embodiment of the present disclosure, a reason why the terminal deletes the SHR in the first variable after the preset time period is mainly that, after the terminal records the SHR in the first variable, the terminal may report the SHR to the network device within a certain time range (e.g., within the preset time period). Once the terminal reports the recorded SHR to the network device, there is no need for the terminal to store the SHR. At this time, the SHR may be deleted to avoid the reported SHR from occupying a storage space of the terminal, thus ensuring the availability rate of the storage space of the terminal.

Optionally, in an embodiment of the present disclosure, the SHR may include at least one of: cell information of a source cell of the terminal; or cell information of a target cell of the terminal.

Optionally, the cell information may include at least one of: a measurement result of a cell, for example, in which the measurement result of the cell may include at least one of: a reference signal receiving power (RSRP) of the cell, a reference signal receiving quality (RSRQ) of the cell, or a signal-to-interference plus noise ratio (SINR); a tracking area code of the cell; a public land mobile network identifier (PLMN ID) corresponding to the cell; or a cell ID corresponding to the cell.

It needs to be noted that, in an embodiment of the present disclosure, when the cell is an NR cell, the cell information of the cell may be included in CellInfo-r17. Optionally, when the NR cell is a source cell, the cell information of the NR cell may be included in SourceCellInfo-r17; when the NR cell is a target cell, the cell information of the NR cell may be included in targetCellInfo-r17. Optionally, the targetCellInfo-r17 or the SourceCellInfo-rl7 may or may not include the above measurement result of the cell. Optionally, the tracing area code of the cell may be included in CGI-Info-Logging-r16 of the targetCellInfo-r17 or the SourceCellInfo-r17. Optionally, the CGI-Info-Logging-r16 of the targetCellInfo-r17 or the SourceCellInfo-r17 may also not include the above tracing area code of the cell. Optionally, the CGI-Info-Logging-r16 of the targetCellInfo-r17 or the SourceCellInfo-r17 may include the above PLMN ID and/or the above CELL ID corresponding to the cell. Optionally, an ID value of the PLMN ID and/or the CELL ID corresponding to the cell included in the CGI-Info-Logging-r16 may be autonomously determined by the terminal based on implementations. For example, the PLMN ID and/or the CELL ID corresponding to the cell included in the CGI-Info-Logging-r16 may be a specific value, such as 0.

Optionally, after the terminal records the SHR in the first variable, the terminal may report the recorded SHR to the network device. The network device may then analyze the SHR reported by the terminal to obtain an analysis result and perform a corresponding processing operation (such as scheduling a corresponding resource for the terminal) based on the analysis result, thus improving the stability of the cell handover of the terminal and/or communication stability.

In summary, in the method for recording an SHR provided by the embodiments of the present disclosure, when the terminal successfully completes the handover between the cells of the different RATs, in response to detecting the SHR trigger event, the terminal records the SHR in the first variable. Thus, for the scenario where "the terminal performs the handover between cells of different RATs", the present disclosure provides a method for recording an SHR and a specific recording location of the SHR, thus achieving a successful record and a subsequent successful report of the SHR during the handover between the cells of different RATs.

FIG. 3 is a flowchart of a method for recording an SHR according to an embodiment of the present disclosure. The method is performed by a terminal. As shown in FIG. 3, the method for recording an SHR may include the following step at S301.

At S301, when a terminal successfully completes a handover between cells of different RATs, the terminal records an SHR in a first variable in response to detecting an SHR trigger event, in which the first variable is configured to record an SHR generated when the terminal successfully completes a handover between cells of a same RAT, and the SHR generated when the terminal successfully completes the handover between the cells of different RATs.

For the detailed description of S301, please refer to the description in the above embodiments.

In summary, for the scenario where "the terminal performs the handover between cells of different RATs", the present disclosure provides a method for recording an SHR and a specific recording location of the SHR, thus achieving the successful record and report of the SHR during the handover between the cells of different RATs.

FIG. 4 is a flowchart of a method for recording an SHR according to an embodiment of the present disclosure. The method is performed by a terminal. As shown in FIG. 4, the method for recording an SHR may include the following step at S401.

At S401, when a terminal successfully completes a handover between cells of different RATs, the terminal records an SHR in a first variable in response to detecting an SHR trigger event, in which the first variable is configured to record the SHR generated when the terminal successfully completes the handover between the cells of different RATs.

Optionally, in an embodiment of the present disclosure, a second variable is further recorded in the terminal, the second variable is configured to record the SHR generated when the terminal successfully completes the handover between cells of the same RAT, and the second variable is different from the first variable.

For the detailed description of S401, please refer to the description in the above embodiments.

In summary, for the scenario where "the terminal performs the handover between cells of different RATs", the present disclosure provides a method for recording an SHR and a specific recording location of the SHR, thus achieving the successful record and report of the SHR during the handover between the cells of different RATs.

FIG. 5 is a flowchart of a method for recording an SHR according to an embodiment of the present disclosure. The method is performed by a terminal. As shown in FIG. 5, the method for recording an SHR may include the following step at S501.

At S501, the terminal sends a first message to a network device, in which the first message may carry first information, and the first information indicates whether the terminal stores the SHR generated when the terminal successfully completes the handover between the cells of different RATs.

Optionally, the step S501 may be performed after the terminal successfully records the SHR generated when performing the handover between the cells of different RATs.

Optionally, in an embodiment of the present disclosure, the first message may be sent by the terminal to the target network device of the terminal. Optionally, after the target network device of the terminal receives the first information in the first message, the target network device may also send the first information to another network device, so that the another network device may be aware of whether the terminal stores "the SHR generated when the terminal successfully completes the handover between the cells of different RATs". Then, the another network device may also request, based on the first information, the terminal to report the SHR generated when the terminal successfully completes the handover between the cells of different RATs.

Optionally, in an embodiment of the present disclosure, the first message may include at least one of: a connection setup complete message, such as an RRC connection setup complete message; a connection resume complete message, such as an RRC connection resume complete message; a connection reestablishment complete message, such as an RRC connection reestablishment complete message; or a connection reconfiguration complete message, such as an RRC connection reconfiguration complete message.

Optionally, in an embodiment of the present disclosure, the first information may further indicate whether the terminal stores the SHR generated when the terminal successfully completes the handover between cells of the same RAT, that is, the first information is both used to indicate whether the terminal stores the SHR generated when the terminal successfully completes the handover between the cells of different RATs, and whether the terminal stores the SHR generated when the terminal successfully completes the handover between the cells of the same RAT. Optionally, in an embodiment of the present disclosure, the first information may be carried in a first information element (IE) of the first message. Optionally, in an embodiment of the present disclosure, the first IE may be an existing IE used to carry "information indicating whether the terminal stores the SHR in a procedure of the handover between the cells of the same RAT". Optionally, for a scenario where "the terminal performs the handover between cells of the same RAT", when the terminal successfully records the SHR generated when performing the handover between the cells of the same RAT, the terminal sends an SHR indication to the network device via the first message, so as to indicate whether there is the SHR generated when performing the handover between the cells of the same RAT in the terminal. The first IE is an IE used to carry the SHR indication in the scenario where "he terminal performs the handover between cells of the same RAT". For example, the first IE may be a successHO-InfoAvailable IE.

Optionally, in an embodiment of the present disclosure, when the first information indicates whether the terminal stores the SHR generated when the terminal successfully completes the handover between cells of the same RAT, and indicates whether the terminal stores the SHR generated when the terminal successfully completes the handover between cells of the different RATs, and the first information is carried in the first IE of the first message, it may be understood that: the terminal reuses the existing IE (e.g., the existing IE used to carry "information indicating whether the terminal stores the SHR in a procedure of the handover between the cells of the same RAT") to carry "information indicating whether the terminal stores the SHR in the procedure of the handover between the cells of different RATs".

Optionally, in another embodiment of the present disclosure, the first message further may carry second information, the second information is different from the first information, and the second information indicates whether the terminal stores the SHR generated when the terminal successfully completes the handover between cells of the same RAT. That is, the first message may carry the first information and/or the second information. The first information indicates whether the terminal stores the SHR generated when the terminal successfully completes the handover between the cells of different RATs, and the second information indicates whether the terminal stores the SHR generated when the terminal successfully completes the handover between cells of the same RAT. Optionally, the second information may be carried in the first IE of the first message. The relevant description of the first IE may refer to the above description. The first information may be carried in a second IE of the first message. Optionally, the second IE may be an independent IE independent of the first IE. For example, the second IE may be a successInterRAT-HO-InfoAvailable IE.

Optionally, in an embodiment of the present disclosure, when the second information is carried in the first IE of the first message and the first information is carried in the second IE of the first message, it may be understood that: the terminal does not reuse the existing IE to carry "information indicating whether the terminal stores the SHR in the procedure of the handover between the cells of different RATs", but uses an independent IE independent of the existing IE to carry "information indicating whether the terminal stores the SHR in the procedure of the handover between the cells of different RATs".

In summary, in the method for recording an SHR provided by the embodiments of the present disclosure, after the terminal records the SHR generated when performing the handover between the cells of different RATs, the terminal sends the first information to the network device via the first message, and the first information indicates whether the terminal stores the SHR generated when the terminal successfully completes the handover between the cells of different RATs. The network device may subsequently request the terminal to report the SHR generated when the terminal successfully completes the handover between the cells of different RATs based on the first information, thus achieving the successful report of the SHR during the handover between the cells of different RATs.

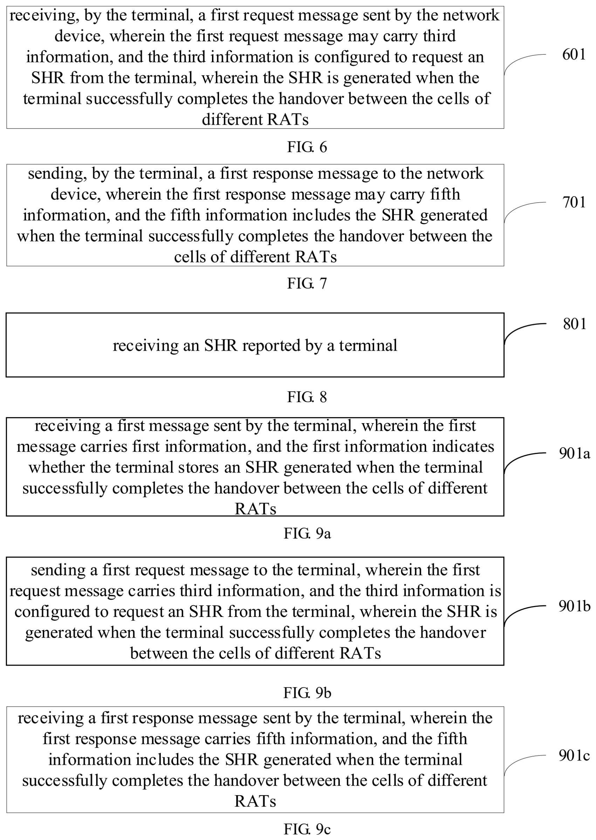

FIG. 6 is a flowchart of a method for recording an SHR according to an embodiment of the present disclosure. The method is performed by a terminal. As shown in FIG. 6, the method for recording an SHR may include the following step at S601.

At S601, the terminal received a first request message sent by the network device, in which the first request message may carry third information, and the third information is configured to request an SHR from the terminal, in which the SHR is generated when the terminal successfully completes the handover between the cells of different RATs.

Optionally, in an embodiment of the present disclosure, the step S601 may be performed under a premise that the first information sent by the terminal to the network device indicates that the terminal stores the SHR generated when the terminal successfully completes the handover between the cells of different RATs, or the step S601 may be performed in a situation where the terminal does not send the first information to the network device. Optionally, the first request message may be sent to the terminal by the target network device of the terminal, or by the source network device of the terminal, or by any other network device.

Optionally, in an embodiment of the present disclosure, the first request message may be a UEInformationRequest message.

Optionally, in an embodiment of the present disclosure, the third information may further be configured to request the SHR generated when the terminal successfully completes the handover between cells of the same RAT. That is, the third information is used to request, from the terminal, both the SHR generated when the terminal successfully completes the handover between the cells of different RATs, and the SHR generated when the terminal successfully completes the handover between the cells of the same RAT. Optionally, the third information may be carried in a third IE of the first request message. Optionally, in an embodiment of the present disclosure, the third IE may be an existing IE used to carry "a message for requesting the SHR in the procedure of the handover between the cells of the same RAT". Optionally, for the scenario where "the terminal performs the handover between cells of the same RAT", when the network device determines that the terminal stores the SHR, the network device may send an SHR request to the terminal via the first request message, to request the terminal to report the SHR. The third IE is an IE used to carry the SHR request in the scenario where "the terminal performs the handover between cells of the same RAT". For example, the third IE may be a successHO-ReportReq IE.

Optionally, in an embodiment of the present disclosure, when the third information is configured to request, from the terminal, the SHR generated when the terminal successfully completes the handover between the cells of different RATs, and the SHR generated when the terminal successfully completes the handover between the cells of the same RAT, and the third information is carried in the third IE of the first request message, it may be understood that: the terminal reuses the existing IE (e.g., the existing IE used to carry "the message for requesting the SHR in the procedure of the handover between the cells of the same RAT") to carry "a message for requesting the SHR in the procedure of the handover between the cells of different RATs".

Optionally, in another embodiment of the present disclosure, the first request message may further carry fourth information, the fourth information is different from the third information, and the fourth information may be configured to request the SHR generated when the terminal successfully completes the handover between cells of the same RAT. That is, the first request message carries the third information and/or the fourth information. The third information is configured to request the SHR generated when the terminal successfully completes the handover between the cells of different RATs, and the fourth information is configured to request the SHR generated when the terminal successfully completes the handover between the cells of the same RAT. Optionally, in an embodiment of the present disclosure, the fourth information may be carried in the third IE of the first request message. The relevant description of the third IE may refer to the above description. The third information may be carried in a fourth IE of the first request message. Optionally, the fourth IE may be an independent IE independent of the third IE in the first request message. For example, the fourth IE may be a successInterRAT-HO-ReportReq IE.

Optionally, in an embodiment of the present disclosure, when the fourth information is carried in the third IE of the first request message and the third information is carried in the fourth IE of the first request message, it may be understood that: the terminal does not reuse the existing IE to carry "the message for requesting the SHR in the procedure of the handover between the cells of different RATs", but uses an independent IE independent of the existing IE to carry "the message for requesting the SHR in the procedure of the handover between the cells of different RATs".

In summary, in method for recording an SHR provided by the embodiments of the present disclosure, the terminal may receive the third information sent by the network device via the first request message, the third information may be configured to request, from the terminal, the SHR generated when the terminal successfully completes the handover between the cells of different RATs. The terminal may subsequently report, to the network device, the SHR generated when the terminal successfully completes the handover between the cells of different RATs based on the third information, thus achieving the successful report of the SHR during the handover between the cells of different RATs.

FIG. 7 is a flowchart of a method for recording an SHR according to an embodiment of the present disclosure. The method is performed by a terminal. As shown in FIG. 7, the method for recording an SHR may include the following step at S701.

At S701, the terminal sends a first response message to the network device, in which the first response message may carry fifth information, and the fifth information includes the SHR generated when the terminal successfully completes the handover between the cells of different RATs.

Optionally, in an embodiment of the present disclosure, the step S701 may be performed after the terminal receives the first request message sent by the network device, or the step S701 may be performed after the terminal successfully records the SHR. Optionally, the first response message may be sent by the terminal to the target network device of the terminal, or to the source network device of the terminal, or to any other network device.

Optionally, in an embodiment of the present disclosure, the first response message may be a UEInformationResponse message.

Optionally, in an embodiment of the present disclosure, the fifth information may also include the SHR generated when the terminal successfully completes the handover between cells of the same RAT. That is, the fifth information includes both the SHR generated when the terminal successfully completes the handover between the cells of different RATs, and the SHR generated when the terminal successfully completes the handover between the cells of the same RAT. Optionally, in an embodiment of the present disclosure, the fifth information may be carried in a fifth IE of the first response message. Optionally, in an embodiment of the present disclosure, the fifth IE may be the existing IE used to carry "the SHR generated when performing the handover between cells of the same RAT". Optionally, for the scenario where "the terminal performs the handover between cells of the same RAT", the terminal may report the SHR to the network device via the first response message, in which the fifth IE is an IE used to carry the SHR reported by the terminal in the scenario where "the terminal performs the handover between cells of the same RAT". For example, the fifth IE may be a SuccessHO-Report-r17 IE.

Optionally, in an embodiment of the present disclosure, when the fifth information includes the SHR generated when the terminal successfully completes the handover between the cells of different RATs and the SHR generated when the terminal successfully completes the handover between cells of the same RAT, and the fifth information is carried in the fifth IE of the first response message, it may be understood that: the terminal reuses the existing IE (e.g., the existing IE used to carry "the SHR generated when performing the handover between cells of the same RAT") to carry "the SHR generated when performing the handover between cells of different RATs".

Optionally, in an embodiment of the present disclosure, the first response message may further carry sixth information, the sixth information is different from the fifth information, and the sixth information may include the SHR generated when the terminal successfully completes the handover between cells of the same RAT. That is, the first response message may carry the fifth information and/or the sixth information, the fifth information may include the SHR generated when the terminal successfully completes the handover between the cells of different RATs, and the sixth information may include the SHR generated when the terminal successfully completes the handover between the cells of the same RAT. Optionally, in an embodiment of the present disclosure, the sixth information may be carried in the fifth IE of the first response message. The relevant description of the fifth IE may refer to the above description. The fifth information may be carried in a sixth IE of the first response message. Optionally, the sixth IE may be an independent IE independent of the fifth IE in the first response message. For example, the sixth IE may be a SuccessHO-Report-interRAT-R18.

Optionally, in an embodiment of the present disclosure, when the sixth information is carried in the fifth IE of the first response message and the fifth information is carried in the sixth IE of the first response message, it may be understood that: the terminal does not reuse the existing IE to carry "the SHR generated when the terminal successfully completes the handover between cells of different RATs", but uses an independent IE independent of the existing IE to carry "the SHR generated when the terminal successfully completes the handover between cells of different RATs".

In summary, in the method for recording an SHR provided by the embodiments of the present disclosure, the terminal may report, to the network device via the first response message, the SHR generated when performing the handover between the cells of different RATs. Thus, for the scenario where "the terminal performs the handover between cells of different RATs", the present disclosure provides a method for reporting an SHR, thus achieving the successful report of the SHR during the handover between the cells of different RATs.

It may be seen from the above contents that, in the embodiments of the present disclosure, the terminal may reuse the existing variable to record the SHR generated when the terminal successfully completes the handover between the cells of different RATs, or may not reuse the existing variable but use an independent variable to record the SHR generated when the terminal successfully completes the handover between the cells of different RATs. Simultaneously, the terminal may reuse the existing IE to carry the above "information indicating whether the terminal stores the SHR during the handover between the cells of different RATs, information for requesting the SHR generated when performing the handover between the cells of different RATs, and the SHR generated when performing the handover between the cells of different RATs", or the terminal may not reuse the existing IE but use an independent IE to carry the above "information indicating whether the terminal stores the SHR generated when performing the handover between the cells of different RATs, information for requesting the SHR generated when performing the handover between the cells of different RATs, and the SHR generated when performing the handover between the cells of different RATs".

Optionally, it needs to be noted that the above solutions may be arbitrarily combined. For example, in some embodiments, the terminal may reuse the existing variable to record the SHR generated when the terminal successfully completes the handover between the cells of different RATs, reuse the existing IE to carry the above "information indicating whether the terminal stores the SHR generated when performing the handover between the cells of different RATs", and use an independent IE to carry the above "information requesting the SHR generated when performing the handover between the cells of different RATs, and the SHR generated when performing the handover between the cells of different RATs". Or, in other embodiments, the terminal may use an independent variable to record the SHR generated when the terminal successfully completes the handover between the cells of different RATs, use an independent IE to carry the above "information indicating whether the terminal stores the SHR generated when performing the handover between the cells of different RATs", and reuse the existing IE to carry the above "information for requesting the SHR generated when performing the handover between the cells of different RATs", and use an independent IE to carry the SHR generated when the terminal successfully completes the handover between the cells of different RATs. It should be understood that any other solution similar to the above examples also falls within a protection scope of the present disclosure.

FIG. 8 is a flowchart of a method for recording an SHR according to an embodiment of the present disclosure. The method is performed by a network device. As shown in FIG. 8, the method for recording an SHR may include the following step at S801.

At S801, an SHR reported by a terminal is received, in which the SHR is information generated by the terminal in response to detecting an SHR trigger event when the terminal successfully completes a handover between cells of different RATs.

For the detailed description of S801, please refer to the description in the above embodiments.

In summary, in the method for recording an SHR provided by the embodiments of the present disclosure, the network device receives the SHR reported by the terminal, in which the SHR is information generated by the terminal in response to detecting the SHR trigger event when the terminal successfully completes the handover between the cells of different RATs. Thus, for the scenario where "the terminal performs the handover between cells of different RATs", the present disclosure provides a method for reporting an SHR, thus achieving the successful report of the SHR during the handover between the cells of different RATs.

FIG. 9a is a flowchart of a method for recording an SHR according to an embodiment of the present disclosure. The method is performed by a network device. As shown in FIG. 9a, the method for recording an SHR may include the following step at S901a.

At S901a, a first message sent by the terminal is received, in which the first message carries first information, and the first information indicates whether the terminal stores an SHR generated when the terminal successfully completes the handover between the cells of different RATs.

Optionally, the first message includes at least one of: a connection setup complete message; a connection resume complete message; a connection reestablishment complete message; or a connection reconfiguration complete message.

Optionally, the first information further indicates whether the terminal stores an SHR generated when the terminal successfully completes a handover between cells of a same RAT.

Optionally, the first message further carries second information, the second information is different from the first information, and the second information indicates whether the terminal stores the SHR generated when the terminal successfully completes the handover between cells of the same RAT.

For the detailed description of S901a, please refer to the description in the above embodiments.

In summary, in the method for recording an SHR provided by embodiments of the present disclosure, the network device may receive the first message sent by the terminal, the first message carries the first information, and the first information indicates whether the terminal stores the SHR generated when the terminal successfully completes the handover between the cells of different RATs, and then the network device may request, based on the first message, the terminal to report the SHR generated when the terminal successfully completes the handover between the cells of different RATs. Thus, for the scenario where "the terminal performs the handover between the cells of different RATs", the present disclosure provides a method for reporting an SHR, thus achieving the successful report of the SHR during the handover between the cells of different RATs.

FIG. 9b is a flowchart of a method for recording an SHR according to an embodiment of the present disclosure. The method is performed by a network device. As shown in FIG. 9b, the method for recording an SHR may include the following step at S901b.

At S901b, a first request message is sent to the terminal, in which the first request message carries third information, and the third information is configured to request an SHR from the terminal, in which the SHR is generated when the terminal successfully completes the handover between the cells of different RATs.

Optionally, the third information is further configured to request an SHR generated when the terminal successfully completes a handover between cells of a same RAT.

Optionally, the first request message further carries fourth information, the fourth information is different from the third information, and the fourth information is configured to request the SHR generated when the terminal successfully completes the handover between cells of the same RAT.

For the detailed description of S901b, please refer to the description in the above embodiments.

In summary, in the method for recording an SHR provided by embodiments of the present disclosure, the network device may send the first request message to the terminal, the first request message carries the third information, and the third information is configured to request, from the terminal, the SHR generated when the terminal successfully completes the handover between the cells of different RATs, and then the terminal may report the SHR generated when the terminal successfully completes the handover between the cells of different RATs to the network device based on the first request message. Thus, for the scenario where "the terminal performs the handover between the cells of different RATs", the present disclosure provides a method for reporting an SHR, thus achieving the successful report of the SHR during the handover between the cells of different RATs.

FIG. 9c is a flowchart of a method for recording an SHR according to an embodiment of the present disclosure. The method is performed by a network device. As shown in FIG. 9c, the method for recording an SHR may include the following step at S901c.

At S901c, a first response message sent by the terminal is received, in which the first response message carries fifth information, and the fifth information includes the SHR generated when the terminal successfully completes the handover between the cells of different RATs.

Optionally, the fifth information further includes an SHR generated when the terminal successfully completes a handover between cells of a same RAT.

Optionally, the first response message further carries sixth information, the sixth information is different from the fifth information, and the sixth information includes the SHR generated when the terminal successfully completes the handover between cells of the same RAT.

For the detailed description of S901c, please refer to the description in the above embodiments.

In summary, for the scenario where "the terminal performing the handover between cells of different RATs", the embodiments of the present disclosure provide a method for reporting an SHR, thus achieving the successful report of the SHR during the handover between the cells of different RATs.

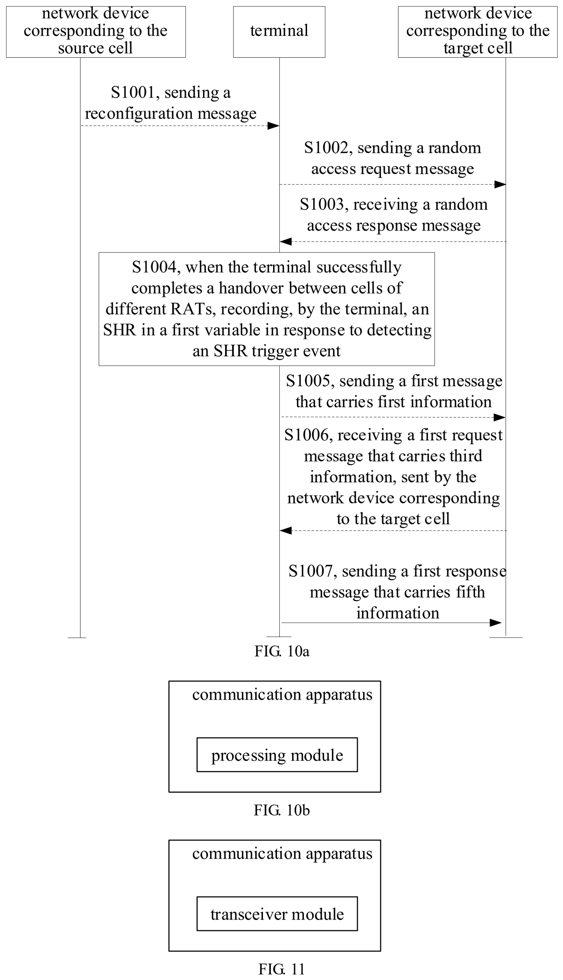

FIG. 10a is an interaction diagram of a method for recording an SHR according to the embodiments of the present disclosure. As shown in FIG. 10a, the method for recording an SHR may include the following steps at S1001 to S1007.

At S1001, the terminal receives a reconfiguration message sent by a network device (i.e., the above source network device) corresponding to a source cell, in which the reconfiguration message may indicate the terminal to hand over to a target cell, and the source cell and the target cell are cells of different RATs.

At S1002, the terminal sends a random access request message to a network device (i.e., the above target network device) corresponding to the target cell.

At S1003, the terminal receives a random access response message sent by the target network device, in which the random access response message carries a C-RNTI of the target cell, and it is determined that the terminal completes a handover between cells.

Optionally, in an embodiment of the present disclosure, the above steps 1001a to 1003a are optionally executed.

At S1004, when the terminal successfully completes a handover between the cells of different RATs, the terminal records an SHR in a first variable in response to detecting an SHR trigger event.

Optionally, the handover between the cells of different RATs includes at least one of: a handover from an NR cell to an LTE cell; or a handover from an LTE cell to an NR cell.

Optionally, recording, by the terminal, the SHR in the first variable includes: recording, by the terminal, an SHR in the first variable, in which the SHR is generated when the terminal successfully completes a latest handover between the cells of different RATs.

Optionally, the first variable is configured to record an SHR generated when the terminal successfully completes a handover between cells of the same RAT, and the SHR generated when the terminal successfully completes the handover between the cells of different RATs.

Optionally, the first variable is configured to record the SHR generated when the terminal successfully completes the handover between the cells of different RATs.

Optionally, a second variable is further recorded in the terminal, the second variable is configured to record the SHR generated when the terminal successfully completes the handover between cells of the same RAT, and the second variable is different from the first variable.

Optionally, after the terminal records the SHR in the first variable, the terminal may also delete or retain the content of the second variable.

Optionally, after the terminal records the SHR in the first variable, the terminal may also delete the SHR in the first variable after a preset time period.

At S1005, the terminal sends a first message to a network device, in which the first message carries first information, the first information indicates whether the terminal stores the SHR generated when the terminal successfully completes the handover between the cells of different RATs.

Optionally, the first message includes at least one of: a connection setup complete message; a connection resume complete message; a connection reestablishment complete message; or a connection reconfiguration complete message.

Optionally, the first information further indicates whether the terminal stores the SHR generated when the terminal successfully completes the handover between cells of the same RAT.

Optionally, the first message further carries second information, the second information is different from the first information, and the second information indicates whether the terminal stores the SHR generated when the terminal successfully completes the handover between cells of the same RAT.

At S1006, the terminal receives a first request message sent by the network device, in which the first request message carries third information, and the third information is configured to request an SHR from the terminal, in which the SHR is generated when the terminal successfully completes the handover between the cells of different RATs.

Optionally, the third information is further configured to request the SHR generated when the terminal successfully completes the handover between cells of the same RAT.

Optionally, the first request message further carries fourth information, the fourth information is different from the third information, and the fourth information is configured to request the SHR generated when the terminal successfully completes the handover between cells of the same RAT.

At S1007, the terminal sends a first response message to the network device, in which the first response message carries fifth information, and the fifth information includes the SHR generated when the terminal successfully completes the handover between the cells of different RATs.

Optionally, the fifth information further includes the SHR generated when the terminal successfully completes the handover between cells of the same RAT.

Optionally, the first response message further carries sixth information, the sixth information is different from the fifth information, and the sixth information includes the SHR generated when the terminal successfully completes the handover between cells of the same RAT.

Optionally, the above steps S1005 and S1006 may be selectively executed. For example, after executing the above step S1004, the above step S1005 may not be executed, while the above steps S1006 and S1007 may be directly executed; or after executing the above step S1004, the above steps S1005 and S1006 may not be executed while the above step S1007 may be directly executed; or after executing the above step S1004, the above steps S1005 to S1007 may be subsequently executed.

In addition, the detailed descriptions of the above steps S1001 to S1007 may refer to the description in the above embodiments.

In summary, for the scenario where "the terminal performs the handover between cells of different RATs", the embodiments of the present disclosure provide a method for generating an SHR, which achieves successful generation and report of the SHR during the handover between the cells of different RATs.

It needs to be noted that the above implementations or embodiments of the present disclosure are not exhaustive, are merely illustration of some implementations or embodiments, and do not specifically limit a protection scope of the present disclosure. Without conflict, each step in one implementation or embodiment may be implemented as an independent embodiment, and various steps may be arbitrarily combined. For example, a solution obtained by removing some steps from an implementation or embodiment may also be implemented as an independent embodiment. Moreover, an order of steps in an implementation or embodiment may be arbitrarily exchanged. In addition, optional methods or examples in an implementation or embodiment may be arbitrarily combined. Furthermore, various implementations or embodiments may be arbitrarily combined. For example, some or all steps from different implementations or embodiments may be arbitrarily combined, and an implementation or embodiment may be arbitrarily combined with optional methods or examples from other implementations or embodiments.

FIG. 10b is a block diagram of a communication apparatus according to an embodiment of the present disclosure. As shown in FIG. 10b, the apparatus may include a processing module.

The processing module is configured to when a terminal successfully completes a handover between cells of different RATs, record an SHR in a first variable in response to detecting an SHR trigger event.

In summary, in the communication apparatus provided by embodiments of the present disclosure, when the terminal successfully completes the handover between the cells of different RATs, the terminal may record the SHR in the first variable in response to detecting the SHR trigger event. Thus, for the scenario where "the terminal performs the handover between cells of different RATs", the present disclosure provides a method for recording an SHR and a specific recording location of the SHR, thus achieving a successful record and a subsequent successful report of the SHR during the handover between the cells of different RATs.

Optionally, in an embodiment of the present disclosure, the handover between the cells of different RATs includes at least one of: a handover from an NR cell to an LTE cell; or a handover from an LTE cell to an NR cell.

Optionally, in an embodiment of the present disclosure, the processing module is further configured to: record an SHR in the first variable, in which the SHR is generated when the terminal successfully completes a latest handover between the cells of different RATs.

Optionally, in an embodiment of the present disclosure, the first variable is configured to record an SHR generated when the terminal successfully completes a handover between cells of a same RAT, and the SHR generated when the terminal successfully completes the handover between the cells of different RATs.

Optionally, in an embodiment of the present disclosure, the first variable is configured to record the SHR generated when the terminal successfully completes the handover between the cells of different RATs.

Optionally, in an embodiment of the present disclosure, a second variable is further recorded in the terminal, the second variable is configured to record the SHR generated when the terminal successfully completes the handover between cells of the same RAT, and the second variable is different from the first variable.

Optionally, in an embodiment of the present disclosure, the apparatus is further configured to delete or retain content of the second variable.

Optionally, in an embodiment of the present disclosure, the apparatus is further configured to: delete the SHR in the first variable after a preset time period.

Optionally, in an embodiment of the present disclosure, the apparatus is further configured to: send a first message to a network device, in which the first message carries first information, the first information indicates whether the terminal stores the SHR generated when the terminal successfully completes the handover between the cells of different RATs, and the first message includes at least one of: a connection setup complete message; a connection resume complete message; a connection reestablishment complete message; or a connection reconfiguration complete message.

Optionally, in an embodiment of the present disclosure, the first information further indicates whether the terminal stores the SHR generated when the terminal successfully completes the handover between cells of the same RAT.

Optionally, in an embodiment of the present disclosure, the first message further carries second information, the second information is different from the first information, and the second information indicates whether the terminal stores the SHR generated when the terminal successfully completes the handover between cells of the same RAT.

Optionally, in an embodiment of the present disclosure, the apparatus is further configured to: receive a first request message sent by the network device, in which the first request message carries third information, and the third information is configured to request, from the terminal, the SHR generated when the terminal successfully completes the handover between the cells of different RATs.

Optionally, in an embodiment of the present disclosure, the third information is further configured to request the SHR generated when the terminal successfully completes the handover between cells of the same RAT.

Optionally, in an embodiment of the present disclosure, the first request message further carries fourth information, the fourth information is different from the third information, and the fourth information is configured to request the SHR generated when the terminal successfully completes the handover between cells of the same RAT.

Optionally, in an embodiment of the present disclosure, the apparatus is further configured to: send a first response message to the network device, in which the first response message carries fifth information, and the fifth information includes the SHR generated when the terminal successfully completes the handover between the cells of different RATs.

Optionally, in an embodiment of the present disclosure, the fifth information further includes the SHR generated when the terminal successfully completes the handover between cells of the same RAT.

Optionally, in an embodiment of the present disclosure, the first response message further carries sixth information, the sixth information is different from the fifth information, and the sixth information includes the SHR generated when the terminal successfully completes the handover between cells of the same RAT.

Optionally, in an embodiment of the present disclosure, the SHR includes at least one of: cell information of a source cell of the terminal; or cell information of a target cell of the terminal.

Optionally, in an embodiment of the present disclosure, the cell information includes at least one of: a measurement result of a cell; a tracking area code of the cell; a PLMN ID corresponding to the cell; or a cell ID corresponding to the cell.

FIG. 11 is a block diagram of a communication apparatus according to an embodiment of the present disclosure. As shown in FIG. 11, the apparatus may include [00197] a transceiver module.

The transceiver module is configured to receive an SHR reported by a terminal, in which the SHR is information generated by the terminal in response to detecting an SHR trigger event when the terminal successfully completes a handover between cells of different RATs.

In summary, in the communication apparatus provided by embodiments of the present disclosure, the network device may receive the SHR reported by the terminal, in which the SHR is the information generated by the terminal in response to detecting the SHR trigger event when the terminal successfully completes the handover between the cells of different RATs. Thus, for the scenario where "the terminal performs the handover between cells of different RATs", the present disclosure provides a method for reporting an SHR, thus achieving the successful report of the SHR during the handover between the cells of different RATs.

Optionally, in an embodiment of the present disclosure, the apparatus is further configured to: receive a first message sent by the terminal, in which the first message carries first information, the first information indicates whether the terminal stores an SHR generated when the terminal successfully completes the handover between the cells of different RATs, and the first message includes at least one of: a connection setup complete message; a connection resume complete message; a connection reestablishment complete message; or a connection reconfiguration complete message.

Optionally, in an embodiment of the present disclosure, the first information further indicates whether the terminal stores an SHR generated when the terminal successfully completes a handover between cells of a same RAT.

Optionally, in an embodiment of the present disclosure, the first message further carries second information, the second information is different from the first information, and the second information indicates whether the terminal stores the SHR generated when the terminal successfully completes the handover between cells of the same RAT.

Optionally, in an embodiment of the present disclosure, the apparatus is further configured to: send a first request message to the terminal, in which the first request message carries third information, and the third information is configured to request an SHR from the terminal, in which the SHR is generated when the terminal successfully completes the handover between the cells of different RATs.

Optionally, in an embodiment of the present disclosure, the third information is further configured to request an SHR from the terminal, in which the SHR is generated when the terminal successfully completes the handover between cells of the same RAT.

Optionally, in an embodiment of the present disclosure, the first request message further carries fourth information, the fourth information is different from the third information, and the fourth information is configured to request the SHR generated when the terminal successfully completes the handover between cells of the same RAT.

Optionally, in an embodiment of the present disclosure, the transceiver module is further configured to: receive a first response message sent by the terminal, in which the first response message carries fifth information, and the fifth information includes the SHR generated when the terminal successfully completes the handover between the cells of different RATs.

Optionally, in an embodiment of the present disclosure, the fifth information further includes the SHR generated when the terminal successfully completes the handover between cells of the same RAT.

Optionally, in an embodiment of the present disclosure, the first response message further carries sixth information, the sixth information is different from the fifth information, and the sixth information includes the SHR generated when the terminal successfully completes the handover between cells of the same RAT.

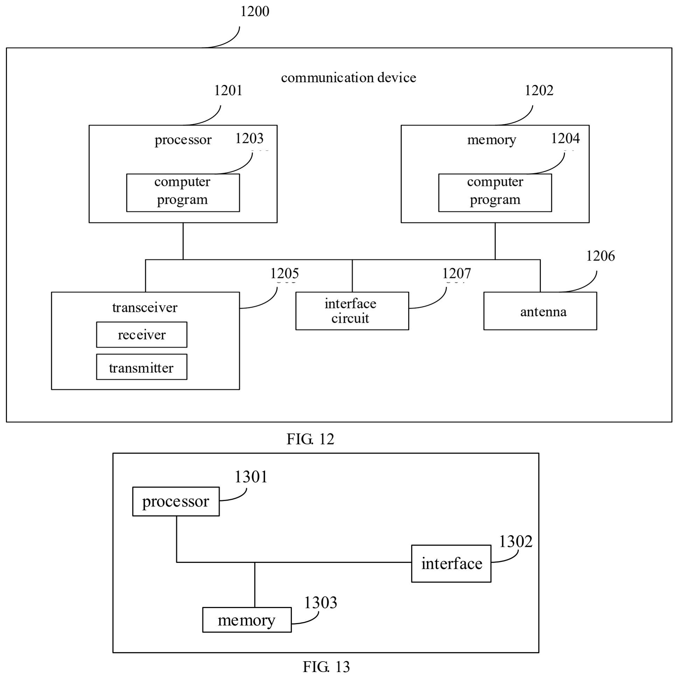

Please refer to FIG. 12, which is a block diagram of a communication device according to an embodiment of the present disclosure. The communication device 1200 may be a base station, or a terminal, or a chip, a chip system, a processor, etc. that supports the base station to implement the above methods, or a chip, a chip system, a processor, etc. that supports the terminal to implement the above methods. The device is configured to implement the methods in the above method embodiments. For details, please refer to the description in the above method embodiments.

The communication device 1200 may include one or more processors 1201. The processor 1201 may be a general-purpose processor or a special-purpose processor. For example, it may be a baseband processor or a central processor. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 1200 may also include one or more memories 1202 on which a computer program 1204 is stored. When the computer program 1204 is executed by the processor 1201, the communication device 1200 is cause to implement the methods in the above method embodiments. Optionally, the memory 1202 may also store data. The communication device 1200 and the memory 1202 may be set separately or integrated together.

Optionally, the communication device 1200 may also include a transceiver 1205 and an antenna 1206. The transceiver 1205 may be called a transceiving unit, a transceiving machine, or a transceiving circuit, etc., to achieve a transceiving function. The transceiver 1205 may include a receiver and a transmitter. The receiver may be called a receiver or a receiving circuit, etc., to achieve a receiving function; and the transmitter may be called a transmitting machine or a transmitting circuit, etc., to achieve a transmitting function.

Optionally, the communication device 1200 includes one or more interface circuits 1207. The interface circuit 1207 is configured to receive code instructions and transmit the code instructions to the processor 1201. When the code instructions are running on the processor 1201, the communication device 1200 is caused to implement the methods in the above method embodiments.

In an implementation, the processor 1201 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit/convey signals.

In an implementation, the processor 1201 may store a computer program 1203. When the computer program 1203 is running on the processor 1201, the communication device 1200 is caused to implement the methods in the above method embodiments. The computer program 1203 may be solidified in the processor 1201. In this way, the processor 1201 may be implemented in hardware.

In an implementation, the communication device 1200 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a base station or a terminal, but the scope of the communication device in the present disclosure is not limited to this, and the structure of the communication device may not be restricted by FIG. 12. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

For the case where the communication device may be a chip or a chip system, please refer to the block diagram of the chip in FIG. 13. The chip in FIG. 13 includes a processor 1301 and an interface 1302. There may be one or more processors 1301, and there may be one or more interfaces 1302.

Optionally, the chip further includes a memory 1303 for storing necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

The present disclosure also provides a readable storage medium for storing instructions. When the instructions are executed by a computer, functions of any one of the above method embodiments are performed.

The present disclosure also provides a computer program product. When the computer program product is executed by a computer, functions of any one of the above method embodiments are performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium may be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of the embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, for the convenience and concise of description, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be included within the protection scope of the present disclosure. Therefore, the protection scope of the present disclosure shall be subject to the protection scope of claims.

## Claims

1. A method for recording a successful handover report (SHR), comprising:
when a terminal successfully completes a handover between cells of different radio access technologies (RATs), recording, by the terminal, an SHR in a first variable in response to detecting an SHR trigger event.

2. The method of claim 1, wherein the handover between the cells of different RATs comprises at least one of:
a handover from a new radio (NR) cell to a long term evolution (LTE) cell; or
a handover from an LTE cell to an NR cell.

3. The method of claim 1 or 2, wherein recording, by the terminal, the SHR in the first variable comprises:
recording, by the terminal, an SHR in the first variable, wherein the SHR is generated when the terminal successfully completes a latest handover between the cells of different RATs.

4. The method of any one of claims 1 to 3, wherein the first variable is configured to record an SHR generated when the terminal successfully completes a handover between cells of a same RAT, and the SHR generated when the terminal successfully completes the handover between the cells of different RATs.

5. The method of any one of claims 1 to 3, wherein the first variable is configured to record the SHR generated when the terminal successfully completes the handover between the cells of different RATs.

6. The method of claim 5, wherein a second variable is further recorded in the terminal, the second variable is configured to record an SHR generated when the terminal successfully completes a handover between cells of a same RAT, and the second variable is different from the first variable.

7. The method of claim 6, further comprising:
deleting or retaining, by the terminal, content of the second variable.

8. The method of any one of claims 1 to 6, further comprising:
deleting the SHR in the first variable after a preset time period.

9. The method of any one of claims 1 to 8, further comprising:
sending, by the terminal, a first message to a network device, wherein the first message carries first information, the first information indicates whether the terminal stores the SHR generated when the terminal successfully completes the handover between the cells of different RATs, and
the first message comprises at least one of:
a connection setup complete message;
a connection resume complete message;
a connection reestablishment complete message; or
a connection reconfiguration complete message.

10. The method of claim 9, wherein the first information further indicates whether the terminal stores an SHR generated when the terminal successfully completes a handover between cells of a same RAT.

11. The method of claim 9, wherein the first message further carries second information, the second information is different from the first information, and the second information indicates whether the terminal stores an SHR generated when the terminal successfully completes a handover between cells of a same RAT.

12. The method of any one of claims 1 to 11, further comprising:
receiving, by the terminal, a first request message sent by the network device, wherein the first request message carries third information, and the third information is configured to request an SHR from the terminal, wherein the SHR is generated when the terminal successfully completes the handover between the cells of different RATs.

13. The method of claim 12, wherein the third information is further configured to request an SHR generated when the terminal successfully completes a handover between cells of a same RAT.

14. The method of claim 12, wherein the first request message further carries fourth information, the fourth information is different from the third information, and the fourth information is configured to request an SHR generated when the terminal successfully completes a handover between cells of a same RAT.

15. The method of any one of claims 1 to 14, further comprising:
sending, by the terminal, a first response message to the network device, wherein the first response message carries fifth information, and the fifth information comprises the SHR generated when the terminal successfully completes the handover between the cells of different RATs.

16. The method of claim 15, wherein the fifth information further comprises an SHR generated when the terminal successfully completes a handover between cells of a same RAT.

17. The method of claim 15, wherein the first response message further carries sixth information, the sixth information is different from the fifth information, and the sixth information comprises an SHR generated when the terminal successfully completes a handover between cells of a same RAT.

18. The method of any one of claims 1 to 17, wherein the SHR comprises at least one of:
cell information of a source cell of the terminal; or
cell information of a target cell of the terminal.

19. The method of claim 18, wherein the cell information comprises at least one of:
a measurement result of a cell;
a tracking area code of the cell;
a public land mobile network identifier (PLMN ID) corresponding to the cell; or
a cell ID corresponding to the cell.

20. A method for recording a successful handover report (SHR), comprising:
receiving, by a network device, an SHR reported by a terminal, wherein the SHR is information generated by the terminal in response to detecting an SHR trigger event when the terminal successfully completes a handover between cells of different radio access technologies (RATs).

21. The method of claim 20, further comprising:
receiving, by the network device, a first message sent by the terminal, wherein the first message carries first information, the first information indicates whether the terminal stores an SHR generated when the terminal successfully completes the handover between the cells of different RATs, and
the first message comprises at least one of:
a connection setup complete message;
a connection resume complete message;
a connection reestablishment complete message; or
a connection reconfiguration complete message.

22. The method of claim 21, wherein the first information further indicates whether the terminal stores an SHR generated when the terminal successfully completes a handover between cells of a same RAT.

23. The method of claim 21, wherein the first message further carries second information, the second information is different from the first information, and the second information indicates whether the terminal stores an SHR generated when the terminal successfully completes a handover between cells of a same RAT.

24. The method of any one of claims 20 to 23, further comprising:
sending, by the network device, a first request message to the terminal, wherein the first request message carries third information, and the third information is configured to request an SHR from the terminal, wherein the SHR is generated when the terminal successfully completes the handover between the cells of different RATs.

25. The method of claim 24, wherein the third information is further configured to request an SHR generated when the terminal successfully completes a handover between cells of a same RAT.

26. The method of claim 24, wherein the first request message further carries fourth information, the fourth information is different from the third information, and the fourth information is configured to request an SHR generated when the terminal successfully completes a handover between cells of a same RAT.

27. The method of any one of claims 20 to 26, wherein receiving the SHR reported by the terminal comprises:
receiving, by the network device, a first response message sent by the terminal, wherein the first response message carries fifth information, and the fifth information comprises an SHR generated when the terminal successfully completes the handover between the cells of different RATs.

28. The method of claim 27, wherein the fifth information further comprises an SHR generated when the terminal successfully completes a handover between cells of a same RAT.

29. The method of claim 27, wherein the first response message further carries sixth information, the sixth information is different from the fifth information, and the sixth information comprises an SHR generated when the terminal successfully completes a handover between cells of a same RAT.

30. A communication apparatus, comprising:
a processing module, configured to, when a terminal successfully completes a handover between cells of different RATs, record, by the terminal, a successful handover report (SHR) in a first variable in response to detecting an SHR trigger event.

31. A communication apparatus, comprising:
a transceiver module, configured to receive, by a network device, a successful handover report (SHR) reported by a terminal, wherein the SHR is information generated by the terminal in response to detecting an SHR trigger event when the terminal successfully completes a handover between cells of different RATs.

32. A communication device, comprising a processor and a memory storing a computer program that, when executed by the processor, cause the communication device to implement the method of any one of claims 1 to 19, or the method of any one of claims 20 to 29.

33. A communication device, comprising a processor and an interface circuit, wherein
the interface circuit is configured to receive code instructions and transmit the code instructions to the processor; and
the processor is configured to run the code instructions to implement the method of any one of claims 1 to 19, or the method of any one of claims 20 to 29.

34. A computer-readable storage medium for storing instructions that, when executed, the method of any one of claims 1 to 19 is implemented, or the method of any one of claims 20 to 29 is implemented.
